# EUROPÄISCHE PATENTANMELDUNG

(11) **EP 4 369 551 A1**
(43) Veröffentlichungstag der Anmeldung: **15.05.2024**
(21) Anmeldenummer: 22206044.4
(22) Anmeldetag: 08.11.2022
(51) Int. Cl.: H02J 7/00, B25F 5/00

(54) **OPTIMIERTE LADEROUTINE FÜR EINEN AKKUMULATOR**

(71) Anmelder: Hilti Aktiengesellschaft, 9494 Schaan (LI)
(72) Erfinder: Ender, Moses, 86916 Kaufering (DE); Stanger, Robert, 87600 Kaufbeuren (DE); Seltmann, Daniel, 86899 Landsberg am Lech (DE); Britz, Rory, 82319 Starnberg (DE); Hartmann, Markus, 87665 Mauerstetten (DE); Hauser, Klaus, 86830 Schwabmünchen (DE); Frenzel, Mathias, 86944 Unterdießen (DE)
(74) Vertreter: Hilti Aktiengesellschaft Corporate Intellectual Property

(57) **Zusammenfassung**

System enthaltend eine Ladevorrichtung und wenigstens einen durch die Ladevorrichtung aufladbaren Akkumulator mit wenigstens einem Energiespeicherelement, wobei die Ladevorrichtung eine Steuereinheit enthält zum Steuern eines Ladevorgang des Akkumulators sowie zum Einstellen des Ladevorgangs in wenigstens eine erste oder zweite Ladeeinstellung.

Zum Erfassen wenigstens einer ersten und zweiten physikalischen Zeitdauer ist wenigstens eine Echtzeituhr enthalten, welche ausgestaltet ist, zum Aussenden wenigstens eines Signals an die Steuereinheit zum Einstellen des Ladevorgangs von einer ersten Ladeeinstellung in eine zweite Ladeeinstellung, nach Ablauf wenigstens der ersten physikalischen Zeitdauer.

## Beschreibung

Die vorliegende Erfindung betrifft ein System enthaltend eine Ladevorrichtung und wenigstens einen durch die Ladevorrichtung aufladbaren Akkumulator mit wenigstens einem Energiespeicherelement, wobei die Ladevorrichtung eine Steuereinheit enthält zum Steuern eines Ladevorgang des Akkumulators sowie zum Einstellen des Ladevorgangs in wenigstens eine erste oder zweite Ladeeinstellung.

Des Weiteren betrifft die vorliegende Erfindung eine Ladevorrichtung zur Verwendung in einem erfindungsgemäßen System.

Darüber hinaus betrifft die vorliegende Erfindung ein Verfahren zum Steuern eines Systems enthaltend eine Ladevorrichtung und wenigstens einen durch die Ladevorrichtung aufladbaren Akkumulator mit wenigstens einem Energiespeicherelement, wobei die Ladevorrichtung eine Steuereinheit enthält zum Steuern eines Ladevorgang des Akkumulators sowie zum Einstellen des Ladevorgangs in wenigstens eine erste oder zweite Ladeeinstellung.

Akkumulatoren als Energieversorgung für eine Werkzeugmaschine sind gemäß dem Stand der Technik weitgehend bekannt. Diese Akkumulator enthalten eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladevorrichtung (auch Lader oder Charger genannt) verbunden. Die Ladevorrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

Ladevorgang startet sofort unabhängig davon, ob innere oder äußere Umstände ideal oder auch nur ausreichend sind (zu heiß oder zu kalt). Laden so schnell wie möglich (maximale Energie in kürzester Zeit) dies beschleunig den Alterungsprozess und schadet dem Akku dauerhaft.

Aufgabe der vorliegenden Erfindung ist das vorstehend beschriebene Problem zu lösen.

Die Aufgabe wird ebenfalls gelöst durch den Gegenstand des Anspruchs 1, 7 und 8. Weitere vorteilhafte Ausführungen der Erfindung sind in den entsprechenden Unteransprüchen beschrieben.

Die Aufgabe wird insbesondere gelöst durch ein System enthaltend eine Ladevorrichtung und wenigstens einen durch die Ladevorrichtung aufladbaren Akkumulator mit wenigstens einem Energiespeicherelement, wobei die Ladevorrichtung eine Steuereinheit enthält zum Steuern eines Ladevorgang des Akkumulators sowie zum Einstellen des Ladevorgangs in wenigstens eine erste oder zweite Ladeeinstellung.

Erfindungsgemäß ist vorgesehen, dass zum Erfassen wenigstens einer ersten und zweiten physikalischen Zeitdauer wenigstens eine Echtzeituhr enthalten ist, welche ausgestaltet ist, zum Aussenden wenigstens eines Signals an die Steuereinheit zum Einstellen des Ladevorgangs von einer ersten Ladeeinstellung in eine zweite Ladeeinstellung, nach Ablauf wenigstens der ersten physikalischen Zeitdauer.

Zeitdauer bedeutet in diesem Zusammenhang, dass eine tatsächliche Zeit bzw. Uhrzeit und das tatsächliche Datum, d.h. eine Tageszeit mit Stunden, Minuten und Sekunden sowie ein Kalendertag oder Wochentag gemessen bzw. erfasst wird. Mit Hilfe der Echtzeituhr kann die tatsächliche Uhrzeit, d.h. Stunden, Minuten und Sekunden messen bzw. erfassen. Darüber hinaus kann durch die Echtzeituhr das tatsächliche Datum, d.h. Tag, Woche, Monat und Jahr messen bzw. erfassen.

Entsprechend einem vorteilhaften Ausführungsbeispiel kann es möglich sein, dass wenigstens ein Photodetektor enthalten ist zum Erfassen wenigstens eines Strahlungswertes sowie Aussenden wenigstens eines Signals in Abhängigkeit des wenigstens einen erfassten Strahlungswertes an die Steuereinheit. Mit "Erfassen wenigstens eines Strahlungswertes" kann die Helligkeit bzw. Menge an Licht eines oder in einem Raum, Zimmer oder dergleichen gemeint sein. Hierdurch kann auf einfache Art und Weise ermittelt werden, ob es Tag oder Nacht bzw. ein Raum durch künstliches Licht erhellt ist.

Gemäß einem weiteren vorteilhaften Ausführungsbeispiel kann es möglich sein, dass wenigstens ein Schallwandler enthalten ist zum Erfassen wenigstens eines Schallwertes sowie Aussenden wenigstens eines Signals in Abhängigkeit des wenigstens einen erfassten Schallwertes an die Steuereinheit. Hierdurch kann auf einfache Art und Weise ermittelt werden, ob in unmittelbarer Nähe Arbeiten bzw. Tätigkeiten durchgeführt werden.

Entsprechend einem vorteilhaften Ausführungsbeispiel kann es möglich sein, dass wenigstens ein Temperatursensor enthalten ist zum Erfassen wenigstens eines Temperaturwertes sowie Aussenden wenigstens eines Signals in Abhängigkeit des wenigstens einen erfassten Temperaturwertes an die Steuereinheit. Hierdurch kann auf einfache Art und Weise ermittelt werden, ob ein Raum beheizt ist oder ob es ggf. Nacht ist.

Gemäß einem weiteren vorteilhaften Ausführungsbeispiel kann es möglich sein, dass wenigstens ein Beschleunigungssensor enthalten ist zum Erfassen wenigstens eines Beschleunigungswertes sowie Aussenden wenigstens eines Signals in Abhängigkeit des wenigstens einen erfassten Beschleunigungswertes an die Steuereinheit. Hierdurch können Vibrationen bzw. Erschütterungen als Folge von Schritten, Arbeiten oder anderen Tätigkeiten erfasst werden.

Entsprechend einem vorteilhaften Ausführungsbeispiel kann es möglich sein, dass die Ladevorrichtung den wenigstens einen Photodetektor, Schallwandler, Temperatursensor und/oder Beschleunigungssensor enthält.

Darüber hinaus kann die Aufgabe gelöst werden durch eine Ladevorrichtung zur Verwendung in einem erfindungsgemäßen System.

Des Weitere kann die Aufgabe gelöst werden durch ein Verfahren zum Steuern eines Systems enthaltend eine Ladevorrichtung und wenigstens einen durch die Ladevorrichtung aufladbaren Akkumulator mit wenigstens einem Energiespeicherelement, wobei die Ladevorrichtung eine Steuereinheit enthält zum Steuern eines Ladevorgang des Akkumulators sowie zum Einstellen des Ladevorgangs in wenigstens eine erste oder zweite Ladeeinstellung.

Erfindungsgemäß sind die Verfahrensschritte enthalten:
- Erfassen wenigstens einer ersten und zweiten physikalischen Zeitdauer durch wenigstens eine Echtzeituhr;
- Aussenden wenigstens eines Signals von der Echtzeituhr an die Steuereinheit nach Ablauf wenigstens der ersten physikalischen Zeitdauer; und
- Einstellen des Ladevorgangs von einer ersten Ladeeinstellung in eine zweite Ladeeinstellung.

Die erste und zweite physikalische Zeitdauer kann dabei als eine erste und zweite Uhrzeit verstanden werden. Die Differenz zwischen der ersten und zweiten Zeitdauer kann dabei Minuten oder auch Stunden betragen.

Bei der Ladeeinstellung kann es sich um die Menge an elektrischer Energie handeln, die bei dem Ladevorgang von der Ladevorrichtung zu dem Akkumulator gelangt.

Darüber hinaus kann es sich bei der Ladeeinstellung auch um den Wert der Stromstärke und/oder Stromspannung für den Ladevorgang handeln.

Des Weiteren kann es sich bei der Ladeeinstellung auch um den Wert der elektrischen Ladung für den Ladevorgang handeln, den der Ladevorrichtung zu dem Akkumulator gelangt.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine seitliche Ansicht auf ein erfindungsgemäßes System bestehend aus einer Werkzeugmaschine und einem Akkumulator;

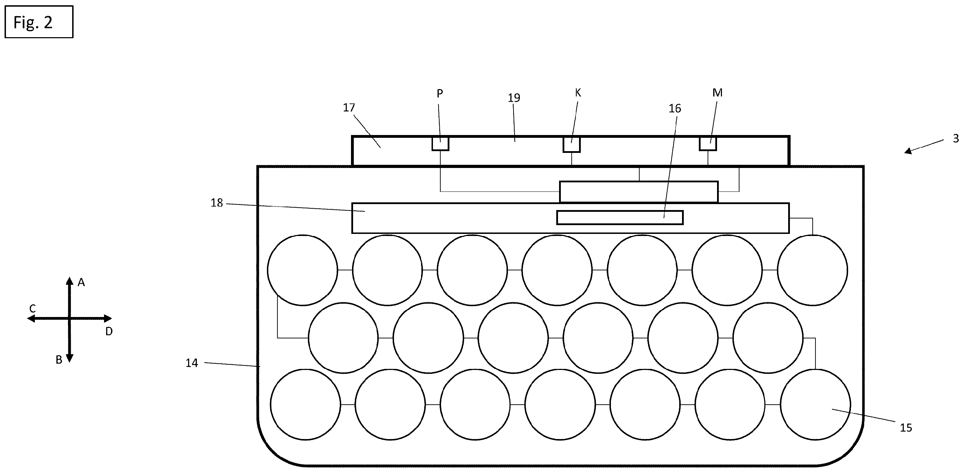

- Figur 2: eine seitliche Ansicht auf den Akkumulator; und
- Figur 3: eine seitliche Ansicht auf die erfindungsgemäße Ladevorrichtung und den mit der Ladevorrichtung verbundenen Akkumulator.

### Ausführungdbeispiele:

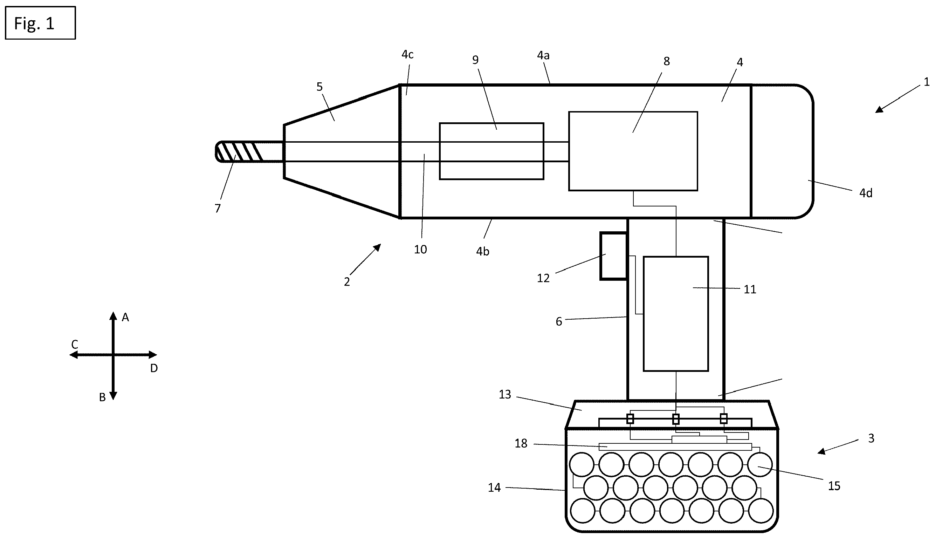

Figur 1 zeigt ein System 1 aus einer Werkzeugmaschine 2 und einem Akkumulator 3 gemäß einer beispielhaften Ausführungsform. Der Akkumulator 3 ist mit der Werkzeugmaschine 2 wiederlösbar verbunden, um die Werkzeugmaschine 2 mit elektrischer Energie zu versorgen.

Die Werkzeugmaschine 2 ist in der gezeigten Ausführungsform als Bohrmaschine ausgestaltet. Alternativ kann die Werkzeugmaschine auch als Bohrmaschine, einen Bohrhammer, eine Säge, ein Schleifgerät oder dergleichen ausgestaltet sein.

Wie in Figur 1 angedeutet enthält die als Bohrmaschine ausgestaltete Werkzeugmaschine 2 im Wesentlichen ein Werkzeugmaschinengehäuse 4 mit einer Werkzeugaufnahme 5 und einem Handgriff 6.

Die Werkzeugaufnahme 5 dient zum Aufnehmen und Halten eines Werkzeugs 7. Bei dem Werkzeug 7 handelt es sich in dem vorliegenden Ausführungsbeispiel um einen Bohrer. Alternativ kann das Werkzeug 7 auch als Schrauben-Bit ausgestaltet sein.

Im Inneren des Werkzeugmaschinengehäuses 4 ist unter anderem ein Antrieb 8, ein Getriebe 9, eine Abtriebswelle 10 und eine Steuereinheit 11 vorgesehen.

Der Antrieb 8 ist beispielsweise als bürstenloser Elektromotor ausgestaltet und dient zum Erzeugen eines Drehmoments.

Die Steuereinheit 11 regelt und steuert die Funktionen bzw. das Verhalten der Werkzeugmaschine 2 und insbesondere des Antriebs 8, d.h. die Drehrichtung und Drehzahl des Antriebs 8.

Der Handgriff 6 enthält wiederum einen Betätigungsschalter 12, ein oberes Ende 6a und ein unteres Ende 6b. Der Betätigungsschalter 12 ist mit der Steuereinheit verbunden, sodass ein Betätigen des Betätigungsschalters 12 zu einer Aktivierung des Antriebs 8 bzw. der Werkzeugmaschine 2 führt.

Wie ebenfalls in Figur 1 gezeigt, ist der Antrieb 8, das Getriebe 9, die Abtriebswelle 10 und die Werkzeugaufnahme 5 so zueinander angeordnet, dass ein von dem Antrieb 8 erzeugtes Drehmoment über das Getriebe 9 und die Abtriebswelle 10 zu der Werkzeugaufnahme 5 gelangen kann. Durch die Werkzeugaufnahme 5 wird das vom Antrieb 8 erzeugte Drehmoment schließlich auf das Werkzeug 7 übertragen.

Das Werkzeugmaschinengehäuse 4 weist des Weiteren eine Oberseite 4a, eine Unterseite 4b, ein vorderes Ende 4c und ein hinteres Ende 4d auf.

An dem vorderen Ende 4c ist die Werkzeugaufnahme 5 positioniert. An der Unterseite 4b und in der Nähe des hinteren Endes 4d des Werkzeugmaschinengehäuses 4 ist das obere Ende 6a des Handgriffs 6 befestigt. An dem unteren Ende 6b des Handgriffs 6 ist eine Werkzeugmaschinenschnittstelle 13 positioniert.

Die Werkzeugmaschinenschnittstelle 13 dient zum wiederlösbaren Verbinden der Werkzeugmaschine 2 mit dem Akkumulator 3.

Gemäß einem alternativen und in den Figuren nicht gezeigten Ausführungsbeispiel kann die Werkzeugmaschine 2 auch so ausgestaltet sein, dass diese mit mehr als einem Akkumulator 3 als Energiequelle verbunden ist.

Der in dem Ausführungsbeispiel beschriebene Akkumulator 3 kann insbesondere als Energiespeichervorrichtung bzw. elektrische Energiequelle für die Werkzeugmaschine 2 dienen. Der Akkumulator 3 enthält dabei im Wesentlichen ein Akku-Gehäuse 14, eine Anzahl an Energiespeicherzellen 15, eine Speichervorrichtung 16, Akku-Schnittstelle 17 sowie eine Steuerungseinrichtung 18. Die Energiespeicherzellen 15 können auch als Akku-Zellen bezeichnet werden.

Die Speichervorrichtung 16 ist im Inneren des Akku-Gehäuses 14 positioniert und dient zu Speichern und Bereitstellen von Daten und Informationen.

Die Akku-Schnittstelle 17 dient zum elektrischen bzw. elektronischen Verbinden des Akkumulators 3 mittels der Werkzeugmaschinenschnittstelle 13 mit der Werkzeugmaschine 2. Die Akku-Schnittstelle 17 enthält hierzu ein Pluskontakt P, ein Minuskontakt M sowie ein Kommunikationskontakt K.

Der Pluskontakt P und Minuskontakt M dienen übertragen elektrischer Energie von den Energiespeicherzellen 15 des Akkumulators 3 zu den Verbrauchern (insbesondere der Antrieb) der Werkzeugmaschine 2.

Der Kommunikationskontakt K dient wiederum zum Kommunizieren der Steuerungseinrichtung 18 des Akkumulators 3 mit der Steuereinheit 11 der Werkzeugmaschine 2. Für die Kommunikation zwischen dem Akkumulator 3 mit der Werkzeugmaschine 2 werden Daten und Informationen in Form von Daten ausgetauscht.

Die Energiespeicherzellen 15 dienen zum Aufnehmen, Speichern und erneuten Abgeben elektrischer Energie. Wie in den Figuren angedeutet, sind die Energiespeicherzellen 15 in zylindrischer Form und auf Basis einer Lithium-Ionen-Technologie ausgestaltet.

Alternativ können die Energiespeicherzellen 15 auch auf einer anderen geeigneten Technologie basieren. Die zylindrische Form der Energiespeicherzellen 15 ist ebenfalls optional, sodass auch jede andere geeignete Form bzw. Geometrie gewählt werden kann. So ist es insbesondere auch möglich, dass die Energiespeicherzellen 15 als Pouchzellen ausgestaltet sind.

Zum wiederlösbaren mechanischen Koppeln des Akkumulators 3 mit der Werkzeugmaschine 2 enthalt das System 1 eine Schienenvorrichtung 19.

Wie in den Figuren angedeutet ist die Schienenvorrichtung 19 zwischen der Akku-Schnittstelle 17 und der Werkzeugmaschinenschnittstelle 13 positioniert, sodass der Akkumulator 3 entlang der Schienenvorrichtung 19 und in Pfeilrichtung C auf die Werkzeugmaschine 2 geschoben und in Pfeilrichtung D wieder von der Werkzeugmaschine 2 entfernt (abgeschoben) werden kann. Wenn der Akkumulator 3 mit Hilfe der Schienenvorrichtung 19 mit der Werkzeugmaschine 2 gekoppelt ist, steht der Pluskontakt P, der Minuskontakt M sowie der Kommunikationskontakt K des Akkumulators 3 mit den entsprechenden Plus- und Minuskontakten P, M sowie dem Kommunikationskontakt K der Werkzeugmaschine 2 in Kontakt. Elektrische Energie sowie elektrische Signale können dann von dem Akkumulator 3 zu der Werkzeugmaschine 2 gelangen.

Eine (in den Figuren nicht gezeigte) Verriegelungsvorrichtung dient zum wiederlösbaren Verbinden des Akkumulators 3 mit der Werkzeugmaschine 2.

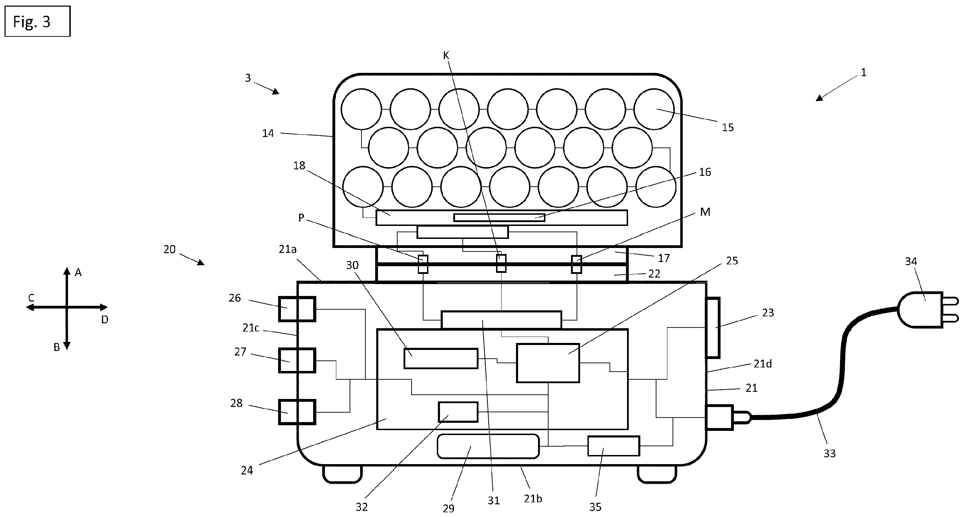

Figur 3 zeigt ein System 1 mit einer Ladevorrichtung 20, welche mit dem Akkumulator 3 zum Laden des Akkumulators 3 mit elektrischer Energie wieder lösbar verbunden ist.

Die Ladevorrichtung 20 enthält im Wesentlichen ein Ladergehäuse 21, eine Laderschnittstelle 22, eine Bedien- und Anzeigeeinrichtung 23, eine Steuerung 24, eine Echtzeituhr 25, einen Photodetektor 26, einen Schallwandler 27, einen Temperatursensor 28, eine Batterie 29, einen Speicher 30, eine Ladungsmesseinrichtung 31 und einen Beschleunigungssensor 32.

Das Ladergehäuse 21 enthält im Wesentlichen eine Oberseite 21a, eine Unterseite 21b, zwei Seitenwände, eine Vorderseite 21c und eine Rückseite 21d. Die zwei Seitenwände sind in Figur 3 nicht dargestellt. Im Inneren des Ladergehäuses 21 ist die Steuerung 24, die Echtzeituhr 25, die Batterie 29, der Speicher 30, die Ladungsmesseinrichtung 31 und der Beschleunigungssensor 32 positioniert.

An der Vorderseite des Ladergehäuses 21 ist der Photodetektor 26, der Schallwandler 27 und der Temperatursensor 28 positioniert. Der Photodetektor 26 ist so an der Vorderseite 21c des Ladergehäuses 21 positioniert, dass das Umgehungslicht bzw. die Helligkeit des Lichtes in der Umgebung der Ladevorrichtung 20 erfasst werden kann.

Des Weiteren ist der Schallwandler 27 so an der Vorderseite 21c des Ladergehäuses 21 positioniert, dass der Schall bzw. Geräusche in der Umgebung der Ladevorrichtung 20 erfasst werden können.

Darüber hinaus ist der Temperatursensor 28 so an der Vorderseite 21c des Ladergehäuses 21 positioniert, dass die Temperatur in der Umgebung der Ladevorrichtung 20 erfasst werden kann. An der Rückseite 21d des Ladergehäuses 21 ist die Bedien- und Anzeigeeinrichtung 23 positioniert, die zur Eingabe von Kommandos bzw. Befehlen in die Steuerung 24 sowie zum Anzeigen von Informationen dient.

Ferne ist an der Rückseite 21d des Ladergehäuses 21 ein erstes Ende eines Stromkabels 33 angeordnet. An einem zweiten Ende des Stromkabels 33 ist ein Stecker 34 vorgesehen, der mit einer (in den Figuren nicht gezeigten) Steckdose wiederlösbar verbunden werden kann. Das Stromkabel 33 dient zum Transport elektrischer Energie von der Steckdose zur Ladevorrichtung 20.

An der Oberseite 21a des Ladergehäuses 21 ist die Laderschnittstelle 22 positioniert, welche zum wiederlösbaren Verbinden der Ladevorrichtung 20 mit der Akku-Schnittstelle 17 des Akkumulators 3 dient. Wie in Figur 3 angedeutet enthält sowohl die Laderschnittstelle 22 als auch die Akku-Schnittstelle 3 ein Pluskontakt P, ein Minuskontakt M und ein Kommunikationskontakt K. Wenn die Akku-Schnittstelle 17 mit der Laderschnittstelle 22 verbunden ist, stehen der Pluskontakt P der Akku-Schnittstelle 17 mit dem Pluskontakt P der Laderschnittstelle 22, der Minuskontakt M der Akku-Schnittstelle 17 mit dem Minuskontakt M der Laderschnittstelle 22 und der Kommunikationskontakt K der Akku-Schnittstelle 17 mit dem Kommunikationskontakt K der Laderschnittstelle 22 in Verbindung. Mit Hilfe der Plus- und Minuskontakte P, M kann elektrische Energie von der Ladevorrichtung 20 zu dem Akkumulator 3 gelangen. Über die Kommunikationskontakte K können Daten und Informationen zwischen dem Akkumulator 3 und der Ladevorrichtung 20 in Form von elektrischen Signalen ausgetauscht werden. Der Pluskontakt P, Minuskontakt M und Kommunikationskontakt K der Akku-Schnittstelle 17 sind mit der Steuerungseinrichtung 18 des Akkumulators 3 verbunden. Dementsprechend sind der Pluskontakt P, Minuskontakt M und Kommunikationskontakt K der Laderschnittstelle 22 mit der Steuerung 24 der Ladevorrichtung 20 verbunden.

Die Echtzeituhr 25 dient zum Erfassen einer physikalischen Zeitdauer bzw. zum Erfassen der aktuellen (d.h. lokalen) Uhrzeit und ist mit der Steuerung 24 sowie dem Speicher 30 verbunden.

Mit lokaler Uhrzeit ist dabei die Uhrzeit des Standortes der Ladevorrichtung 20 zu verstehen, d.h. beispielsweise mitteleuropäische Zeit bzw. Central European Time (MEZ, CET) für einen Standort in Deutschland. Alternativ dazu kann auch eine andere Uhrzeit (z.B. koordinierte Weltzeit (Coordinated Universal Time UTC)) für die Echtzeituhr 25 verwendet werden.

Mit Hilfe der Echtzeituhr 25 kann die Steuerung 24 einen Ladevorgang des Akkumulators 3, d.h. ein Aufladen eines mit der Ladevorrichtung 20 verbundenen Akkumulators 3, zeitlich steuern. Mit anderen Worten: der Ladevorgang kann zu bestimmten Uhrzeiten gestartet, zeitweilig unterbrochen oder dauerhaft gestoppt werden.

Wie in Figur 3 angedeutete ist die Batterie 29 so mit der Echtzeituhr 25 verbunden, dass diese von der Batterie 29 mit elektrischer Energie versorgt wird, wenn die Ladevorrichtung 20 nicht über das Stromkabel 33 mit einer Steckdose verbunden ist. Die Batterie 29 ist als wiederaufladbare Batterie (d.h. Sekundärbatterie oder Akkumulator) ausgestaltet. Mit Hilfe der Batterie 29 kann die Echtzeituhr 25 funktionsfähig bleiben und die Uhrzeit erfassen, auch wenn keine Energie durch das Stromkabel 33 zur Verfügung steht.

Des Weiteren ist eine Ladeeinheit 35 im Inneren des Ladegehäuses 21 vorgesehen, die mit der Batterie 29 und dem Stromkabel 33 verbunden ist. Durch die Ladeeinheit 35 kann die Batterie 29 mit elektrischer Energie aus der Steckdose über das Stromkabel 33 geladen werden.

Zur Durchführung des Ladevorgangs unter Berücksichtigung der erfassten Echtzeit durch die Echtzeituhr 25 wird gemäß dem erfindungsgemäßen Verfahren ein Ladevorgang des Akkumulators 3 durch die Ladevorrichtung 20 zu einer ersten Uhrzeit (beispielsweise um 17:00 Uhr) gestartet. Nach Ablauf einer Zeitdauer von beispielsweise 30 Minuten (d.h. wenn die Echtzeituhr 25 eine Uhrzeit von 17:30 Uhr erfasst) wird der Ladevorgang gestoppt, sodass eine weitere elektrische Energie von der Ladevorrichtung 20 zu dem angeschlossenen Akkumulator 3 gelangt. Zur Unterbrechung des Ladevorgangs wird von der Echtzeituhr 25 ein entsprechendes Signal an die Steuerung 24 gesendet, wodurch keine weitere elektrische Energie mehr von der Ladevorrichtung 20 zu dem Akkumulator 3 gelangt.

Wenn die Echtzeituhr 25 eine Uhrzeit von 7 Uhr erfasst (d.h. nach 13 Stunden und 30 Minuten nach der Unterbrechung des Ladevorgangs) wird der Ladevorgang mit dem weiterhin angeschlossenen Akkumulator 3 fortgesetzt. Der Ladevorgang kann dabei bis zum Erreichen einer vorbestimmten Ladungsmenge fortgesetzt werden. Die Menge an elektrischer Ladung, die von der Ladevorrichtung 20 zum Akkumulator 3 gelangt, wird von der Ladungsmesseinrichtung 31 erfasst und an die Steuerung übermittelt. Alternativ hierzu oder zusätzlich zum Erfassen der Ladungsmenge durch die Ladungsmesseinrichtung 31 kann die Ladung, die während des Ladungsvorgang von der Ladevorrichtung 20 zum Akkumulator 3 gelangt, auch durch eine Messvorrichtung als Bestandteil des Akkumulators 3 erfasst werden. Die Messvorrichtung zum Erfassen einer Ladungsmenge als Bestandteil des Akkumulators 3 ist in den Figuren nicht gezeigt.

Mit Hilfe des Photodetektors 26, Schallwandlers 27, Temperatursensors 28 und Beschleunigungssensors 32 kann der Ladevorgang zusätzlich beeinflusst werden.

Der Photodetektor 26 erfasst die Lichtverhältnisse in der Umgebung der Ladevorrichtung 20. Wenn der Photodetektor 26 einen Helligkeitswert mit einem bestimmten Schwellwert erfasst, kann mit Hilfe von in dem Speicher 30 hinterlegten Daten ermittelt werden, ob es in der Umgebung der Ladevorrichtung 20 dunkel ist. Hierdurch lässt sich darauf schließen, dass es beispielsweise Nacht und/oder keine Beleuchtung mehr genutzt ist. Es ist somit wahrscheinlich, dass aufgrund dieser Umstände kein Anwender mehr in der Nähe der Ladevorrichtung 20 bzw. des Akkumulators 3 befindet und auch dass keine baldige Verwendung des Akkumulators 3 zu erwarten ist. Der Ladevorgang kann wegen der zu erwartenden längeren Nichtbenutzung des Akkumulators 3 unterbrochen werden. Sobald ein Helligkeitswert mit einem bestimmten Schwellwert wieder von dem Photodetektor 26 erfasst wird, kann der Ladevorgang vorgesetzt werden.

Der Schallwandler 27 erfasst Geräusche in der Umgebung der Ladevorrichtung 20 und kann hierdurch ermitteln, ob es in der Umgebung der Ladevorrichtung 20 lautlos ist. In dem Falle einer geräuschlosen bzw. nahezu geräuschlosen Umgebung, kann angenommen werden, dass sich kein Anwender mehr in der Nähe der Ladevorrichtung 20 bzw. des Akkumulators 3 befindet und auch dass keine baldige Verwendung des Akkumulators 3 zu erwarten ist. Der Ladevorgang kann wegen der zu erwartenden längeren Nichtbenutzung des Akkumulators 3 unterbrochen werden. Sobald wieder Geräusche wieder erfasst werden, kann der Ladevorgang vorgesetzt werden.

Der Temperatursensor 28 erfasst die Temperatur in der Umgebung der Ladevorrichtung 20. Bei einem Vergleich der erfassten Temperaturen mit in dem Speicher 30 hinterlegten Temperaturschwellwerten kann festgestellt werden, ob die Umgebung der Ladevorrichtung 20 kalt. Es kann daher vermutet werden, dass Heizsysteme in der Umgebung der Ladevorrichtung 20 deaktiviert wurden. Dies kann beispielsweise über Nacht geschehen, um Energie und Kosten zu sparen. Aufgrund einer nicht geheizten Umgebung kann vermutet werden, dass sich kein Anwender mehr in der Nähe der Ladevorrichtung 20 bzw. des Akkumulators 3 befindet und auch dass keine baldige Verwendung des Akkumulators 3 zu erwarten ist. Der Ladevorgang kann wegen der zu erwartenden längeren Nichtbenutzung des Akkumulators 3 unterbrochen werden. Sobald eine Temperatur mit einem bestimmten Schwellwert wieder von dem Temperatursensor 28 erfasst wird, kann der Ladevorgang vorgesetzt werden.

Der Beschleunigungssensor 32 erfasst Erschütterungen in Form von Vibrationen bzw. Beschleunigungen. Wenn keine Vibrationen bzw. Beschleunigungen aufgrund von Schritten eines vermeintlichen Anwenders des Akkumulators 3 oder Arbeitsvorgängen erfasst werden, kann vermutet werden, dass sich kein Anwender mehr in der Nähe der Ladevorrichtung 20 bzw. des Akkumulators 3 befindet und auch dass keine baldige Verwendung des Akkumulators 3 zu erwarten ist. Der Ladevorgang kann wegen der zu erwartenden längeren Nichtbenutzung des Akkumulators 3 unterbrochen werden. Sobald wieder Erschütterungen in Form von Vibrationen bzw. Beschleunigungen von dem Beschleunigungssensor 32 erfasst werden, kann der Ladevorgang vorgesetzt werden.

### Bezugszeichenliste

- 1: System
- 2: Werkzeugmaschine
- 3: Akkumulator
- 4: Werkzeugmaschinengehäuse
- 4a: Oberseite des Werkzeugmaschinengehäuses
- 4b: Unterseite des Werkzeugmaschinengehäuses
- 4c: vorderes Ende des Werkzeugmaschinengehäuses
- 4d: hinteres Ende des Werkzeugmaschinengehäuses
- 5: Werkzeugaufnahme
- 6: Handgriff
- 6a: oberes Ende des Handgriffs
- 6b: unteres Ende des Handgriffs
- 7: Werkzeug
- 8: Antrieb
- 9: Getriebe
- 10: Abtriebswelle
- 11: Steuereinheit
- 12: Betätigungsschalter
- 13: Werkzeugmaschinenschnittstelle
- 14: Akku-Gehäuse
- 15: Energiespeicherzelle
- 16: Speichervorrichtung
- 17: Akku-Schnittstelle
- 18: Steuerungseinrichtung
- 19: Schienenvorrichtung
- 20: Ladevorrichtung
- 21: Ladergehäuse
- 21a: Oberseite des Ladergehäuses
- 21b: Unterseite des Ladergehäuses
- 21c: Vorderseite des Ladergehäuses
- 21d: Rückseite des Ladergehäuses
- 22: Laderschnittstelle
- 23: Bedien- und Anzeigeeinrichtung
- 24: Steuerung der Ladevorrichtung
- 25: Echtzeituhr
- 26: Photodetektor
- 27: Schallwandler
- 28: Temperatursensor
- 29: Batterie
- 30: Speicher
- 31: Ladungsmesseinrichtung
- 32: Beschleunigungssensors
- 33: Stromkabel
- 34: Stecker
- 35: Ladeeinheit

- P: Pluskontakt
- M: Minuskontakt
- K: Kommunikationskontakt

## Patentansprüche

1. System (1) enthaltend eine Ladevorrichtung (20) und wenigstens einen durch die Ladevorrichtung (20) aufladbaren Akkumulator (3) mit wenigstens einem Energiespeicherelement (15), wobei die Ladevorrichtung (20) eine Steuereinheit (11) enthält zum Steuern eines Ladevorgang des Akkumulators (3) sowie zum Einstellen des Ladevorgangs in wenigstens eine erste oder zweite Ladeeinstellung,
**dadurch gekennzeichnet, dass** zum Erfassen wenigstens einer ersten und zweiten physikalischen Zeitdauer wenigstens eine Echtzeituhr (25) enthalten ist, welche ausgestaltet ist, zum Aussenden wenigstens eines Signals an die Steuereinheit (11) zum Einstellen des Ladevorgangs von einer ersten Ladeeinstellung in eine zweite Ladeeinstellung, nach Ablauf wenigstens der ersten physikalischen Zeitdauer.

2. System (1) nach Anspruch 1,
**dadurch gekennzeichnet, dass** wenigstens ein Photodetektor (26) enthalten ist zum Erfassen wenigstens eines Strahlungswertes sowie Aussenden wenigstens eines Signals in Abhängigkeit des wenigstens einen erfassten Strahlungswertes an die Steuereinheit (11).

3. System (1) nach Anspruch 1 oder 2,
**dadurch gekennzeichnet, dass** wenigstens ein Schallwandler (27) enthalten ist zum Erfassen wenigstens eines Schallwertes sowie Aussenden wenigstens eines Signals in Abhängigkeit des wenigstens einen erfassten Schallwertes an die Steuereinheit (11).

4. System (1) nach wenigstens einem der Ansprüche 1 bis 3,
**dadurch gekennzeichnet, dass** wenigstens ein Temperatursensor (28) enthalten ist zum Erfassen wenigstens eines Temperaturwertes sowie Aussenden wenigstens eines Signals in Abhängigkeit des wenigstens einen erfassten Temperaturwertes an die Steuereinheit (11).

5. System (1) nach wenigstens einem der Ansprüche 1 bis 4,
**dadurch gekennzeichnet, dass** wenigstens ein Beschleunigungssensor (32) enthalten ist zum Erfassen wenigstens eines Beschleunigungswertes sowie Aussenden wenigstens eines Signals in Abhängigkeit des wenigstens einen erfassten Beschleunigungswertes an die Steuereinheit (11).

6. System (1) nach wenigstens einem der Ansprüche 1 bis 5,
**dadurch gekennzeichnet, dass** die Ladevorrichtung (20) den wenigstens einen Photodetektor (26), Schallwandler (27), Temperatursensor (28) und/oder Beschleunigungssensor (32) enthält.

7. Ladevorrichtung (20) zur Verwendung in einem System (1) nach wenigstens einem der Ansprüche 1 bis 6.

8. Verfahren zum Steuern eines Systems (1) enthaltend eine Ladevorrichtung (20) und wenigstens einen durch die Ladevorrichtung (20) aufladbaren Akkumulator (3) mit wenigstens einem Energiespeicherelement (15), wobei die Ladevorrichtung (20) eine Steuereinheit (11) enthält zum Steuern eines Ladevorgang des Akkumulators (3) sowie zum Einstellen des Ladevorgangs in wenigstens eine erste oder zweite Ladeeinstellung, **gekennzeichnet durch** die Verfahrensschritte:
- Erfassen wenigstens einer ersten und zweiten physikalischen Zeitdauer durch wenigstens eine Echtzeituhr (25);
- Aussenden wenigstens eines Signals von der Echtzeituhr (25) an die Steuereinheit (11) nach Ablauf wenigstens der ersten physikalischen Zeitdauer; und
- Einstellen des Ladevorgangs von einer ersten Ladeeinstellung in eine zweite Ladeeinstellung.
